# EUROPEAN PATENT SPECIFICATION

(11) **EP 3 176 285 B1**
(45) Date of publication and mention of the grant of the patent: **05.09.2018**
(21) Application number: 15826563.7
(22) Date of filing: 24.07.2015
(51) Int. Cl.: C23C 26/00, B32B 15/08, B32B 15/098, C21D 9/46, H01F 1/18, H02K 1/02, H02K 15/02, B32B 15/01, B32B 15/04, B05D 7/14, B05D 3/02, B23K 20/02, B32B 15/18, B23K 101/18, B23K 101/36

(54) **ELECTRICAL STEEL SHEET FOR STACKING, STACKED ELECTRICAL STEEL SHEET, METHOD OF MANUFACTURING STACKED ELECTRICAL STEEL SHEET, AND IRON CORE FOR AUTOMOTIVE MOTOR**
ELEKTROSTAHLBLECH ZUM STAPELN, GESTAPELTES ELEKTROSTAHLBLECH, VERFAHREN ZUR HERSTELLUNG EINES GESTAPELTEN ELEKTROSTAHLBLECHS UND EISENKERN FÜR KRAFTFAHRZEUGMOTOR
TÔLE D'ACIER ÉLECTROMAGNÉTIQUE POUR STRATIFICATION, TÔLE D'ACIER ÉLECTROMAGNÉTIQUE TYPE STRATIFIÉE AINSI QUE PROCÉDÉ DE FABRICATION DE CELLE-CI, ET NOYAU DE FER POUR MOTEUR D'AUTOMOBILE

(30) Priority: 29.07.2014 JP 2014154225; 26.02.2015 JP 2015037173
(43) Date of publication of application: 07.06.2017
(73) Proprietor: JFE Steel Corporation, Tokyo 100-0011 (JP)
(72) Inventor: NAKAGAWA, Nobuko, Tokyo 100-0011 (JP); SASHI, Kazumichi, Tokyo 100-0011 (JP); MURAMATSU, Naoki, Tokyo 100-0011 (JP); TADA, Chiyoko, Tokyo 100-0011 (JP)
(74) Representative: Hoffmann Eitle
(86) International application number: PCT/JP2015/003725
(87) International publication number: WO 2016/017132

(56) References cited:
- JP-A- H11 162 723
- JP-A- H11 162 724
- JP-A- 2000 030 923
- JP-A- 2000 173 816
- US-A1- 2011 217 565

## Description

### TECHNICAL FIELD

The disclosure relates to an electrical steel sheet for stacking suitable as a material of a stacked iron core for an automotive motor and the like, particularly to improve high-temperature bond property. The disclosure also relates to a stacked electrical steel sheet obtained by stacking such electrical steel sheets for stacking, and a method of manufacturing the stacked electrical steel sheet.

### BACKGROUND

A stacked electrical steel sheet used for an iron core of electrical equipment and the like has conventionally been manufactured by stacking a plurality of electrical steel sheets having insulating coatings and then integrating the electrical steel sheets by a method such as caulking or welding. The growing demand for more efficient electrical equipment to save energy in recent years has fostered the tendency to reduce the sheet thickness of steel sheets used in a stacked electrical steel sheet in order to reduce eddy current loss. In the case where the steel sheets are thin, however, not only caulking or welding is difficult, but also the stacked end surfaces separate easily, making it hard to keep the shape as an iron core.

To solve this problem, a technique of forming a stacked electrical steel sheet by thermocompression-bonding electrical steel sheets each of which has a bond-type insulating coating on its surface, instead of integrating steel sheets by caulking or welding, has been proposed. By punching the stacked electrical steel sheet obtained by stacking the plurality of steel sheets in this way, the iron core manufacturing efficiency can be improved as compared with the case of working each individual steel sheet. Such a stacked electrical steel sheet is required to have punching quality in addition to excellent bond strength.

In view of these requirements, JP H6-330231 A (PTL 1) proposes a stacked electrical steel sheet with high bond strength by making the surface of each steel sheet rough by any of various methods and optimizing the roughness pattern.

JP H7-201551 A (PTL 2) proposes a stacked electrical steel sheet with improved punching quality by setting the average grain size d of the surface of each steel sheet to d ≥ 20n (n is the number of steel sheets). By increasing the average grain size, the crystal grain boundaries which cause lower punching quality of the stacked electrical steel sheet are reduced to improve punching quality.

JP 2000-173815 A (PTL 3) proposes a stacked electrical steel sheet with shear bond strength of 50 kgf/cm² or more at ordinary temperature. The shear bond strength of the stacked electrical steel sheet is increased to prevent a displacement or peeling of steel sheets which may occur during punching.

PTL 4 relates to a magnetic steel sheet for adhesive laminated iron cores, coated on at least one face with a coating composition containing acrylic, epoxy, phenol resins at a mixing ratio of about 20:60:20 wt%.

PTL 5 relates to a black-coated steel sheet comprising zinc-based plating layers disposed on both surfaces of a steel sheet, a chromium-free chemical conversion coating disposed on the zinc-based plating layer on at least one surface of the steel sheet, and a colored single organic coating disposed on the chemical conversion coating.

### CITATION LIST

### Patent Literatures

| | |
|---|---|
| PTL 1: JP H6-330231 A | PTL 4: JP 2000 030923 A |
| PTL 2: JP H6-330231 A | PTL 5: US 2011/217565 A1 |
| PTL 3: JP 2000-173815 A | |

### SUMMARY

### (Technical Problem)

These techniques improve the bond strength or punching quality of stacked electrical steel sheets. However, the performance of stacked electrical steel sheets is still not sufficient for use in iron cores for automotive motors which have been in rapidly increasing demand in recent years.

For example, an automotive motor is used in high-temperature oil of about 180 °C. A stacked electrical steel sheet used in the iron core of the automotive motor therefore needs to be able to be used stably for a long time in high-temperature oil. The oil temperature is expected to increase more in the future. Accordingly, the stacked electrical steel sheet is required to have high-temperature oil resistance in addition to high punching quality and bond strength. The conventional techniques such as those described in PTL 1 to PTL 3 do not sufficiently take into account the high-temperature oil resistance.
For example, PTL 3 merely evaluates the shear bond strength of the stacked electrical steel sheet at ordinary temperature (20 °C).

It could be helpful to provide an electrical steel sheet for stacking that has a bond-type insulating coating and is suitable for the manufacture of a stacked electrical steel sheet put to uses where high-temperature oil resistance is required, e.g., automotive motors. It could also be helpful to provide a stacked electrical steel sheet obtained by stacking such electrical steel sheets for stacking, and a method of manufacturing the stacked electrical steel sheet.

As a result of conducting intensive study, we discovered that, in the case of manufacturing a stacked electrical steel sheet by stacking electrical steel sheets each of which has a bond-type insulating coating, the shear bond strength and oil resistance of the obtained stacked electrical steel sheet in a high-temperature condition, i.e. the high-temperature bond property of the stacked electrical steel sheet, depend on the coating hardness of the bond-type insulating coating before stacking.

We conducted further study on the bond-type insulating coating based on the aforementioned discovery, and found an optimal hardness range of the bond-type insulating coating.

### (Solution to Problem)

We provide the following:
1. An electrical steel sheet for stacking, including: an electrical steel sheet; and a bond-type insulating coating formed on at least one surface of the electrical steel sheet and having Martens hardness HM of 50 or more and less than 500, wherein the bond-type insulating coating contains at least one phenolic resin selected from novolac type, resol type, and a mixture thereof in an amount of 60 mass% or more with respect to the total solid content, and a total content of resins other than the phenolic resin in the bond-type insulating coating is less than 40 mass% with respect to the total solid content.
2. The electrical steel sheet for stacking according to the foregoing 1, wherein the bond-type insulating coating has a logarithmic decrement peak temperature of 50 °C or more and 200 °C or less measured by a rigid body pendulum test.
3. A stacked electrical steel sheet, including a plurality of the electrical steel sheet for stacking according to the foregoing 1 or 2 stacked through the bond-type insulating coating.
4. A method of manufacturing a stacked electrical steel sheet, including: stacking a plurality of the electrical steel sheet for stacking according to the foregoing 1 or 2; and simultaneously heating and pressing the stacked plurality of the electrical steel sheet for stacking.
5. An iron core for an automotive motor, including a plurality of the stacked electrical steel sheet according to the foregoing 3 stacked through the bond-type insulating coating.

### (Advantageous Effect)

It is thus possible to obtain a stacked electrical steel sheet suitable for uses where high-temperature bond property is required, e.g., automotive motors, and an iron core for an automotive motor formed by stacking such stacked electrical steel sheets.

### DETAILED DESCRIPTION

A stacked electrical steel sheet is typically manufactured in the following steps:
(i) Application step: a step of applying a composition for forming a bond-type insulating coating on the surface of an electrical steel sheet as a material.
(ii) Baking step: a step of baking the applied composition to form a bond-type insulating coating (hereafter also simply referred to as "coating"). A steel sheet obtained as a result of this step is referred to as "electrical steel sheet for stacking" in the disclosure.
(iii) Heating and pressing step: a step of stacking a plurality of electrical steel sheets for stacking obtained as a result of the baking step and heating and pressing the plurality of electrical steel sheets to integrate them. A stacked steel sheet obtained as a result of this step is referred to as "stacked electrical steel sheet" in the disclosure.

In the typical manufacture of a stacked electrical steel sheet, the baking step and the heating and pressing step are rarely performed successively, and each electrical steel sheet for stacking obtained as a result of the baking step is stored once and transported according to need, and then subjected to the heating and pressing step. In the case of using steel strips which are a common form of material steel sheets, each steel strip after the baking step is once coiled and stored, and uncoiled before the heating and pressing step. Each of the steps will be described in detail later. Two or more electrical steel sheets for stacking obtained in this way are stacked through their bond-type insulating coatings and put to use.

One of the disclosed embodiments is described in detail below. An electrical steel sheet for stacking according to the disclosure includes: an electrical steel sheet; and a bond-type insulating coating formed on at least one surface of the electrical steel sheet. The bond-type insulating coating has Martens hardness of 50 or more and less than 500. Moreover, the bond-type insulating coating preferably has a logarithmic decrement peak temperature of 50 °C or more and 200 °C or less measured by a rigid body pendulum test.

The reasons for limiting the Martens hardness and logarithmic decrement peak temperature of the bond-type insulating coating are described first.

In the disclosure, it is important to limit the Martens hardness HM of the bond-type insulating coating in the electrical steel sheet for stacking after the baking step to 50 or more and less than 500. If the Martens hardness is less than 50, the steel sheets tend to stick to each other in the case where the steel sheets are stored one on top of the other until the heating and pressing step. Sticking tends to occur particularly in the case of storing steel strips in coiled state. Such sticking can be prevented by limiting the Martens hardness to 50 or more. Besides, if the HM is less than 50, there is a possibility that the coating squeezes out from the end surface when the electrical steel sheets for stacking are pressed in the heating and pressing step, causing steel sheet contamination or lower operating efficiency.

If the Martens hardness is 500 or more, the stacked electrical steel sheet after heating and pressing does not have sufficient bond strength and high-temperature oil resistance. This is because the bond-type insulating coating hardens excessively in the baking step, and so the reaction necessary to attain bond strength is insufficient in the subsequent heating and pressing.

Moreover, in the disclosure, it is preferable to limit the logarithmic decrement peak temperature of the bond-type insulating coating to 50 °C or more and 200 °C or less. The logarithmic decrement is a value measured by a rigid body pendulum test defined in ISO 12013-1 and 12013-2. The electrical steel sheets for stacking according to the disclosure are integrated by the heating and pressing treatment. During the treatment, the coating softens with a rise in temperature, but the chemical reaction of the coating components proceeds and eventually the coating hardens. The logarithmic decrement peak temperature is one of the indices representing the behavior of the coating during the heating and pressing. If the peak temperature is 50 °C or more, the coating is kept from squeezing out from the end surface when the electrical steel sheets for stacking are pressed and causing steel sheet contamination. If the peak temperature is 200 °C or less, the hardening reaction proceeds under typical heating and pressing step conditions, and bonding is achieved. In the case where there is no peak, the hardening reaction does not proceed under typical heating and pressing step conditions and bonding is difficult. Such a coating is not suitable for electrical steel sheets for stacking.

By controlling the properties of the bond-type insulating coating obtained as a result of the baking step as described above, it is possible to improve the bond strength and high-temperature oil resistance of the stacked electrical steel sheet eventually obtained as a result of the heating and pressing step.

The following describes suitable methods of manufacturing an electrical steel sheet for stacking, a stacked electrical steel sheet, and an iron core for an automotive motor according to the disclosure, although the manufacturing methods are not limited to such.

### (Electrical steel sheet)

The type of electrical steel sheet used in the disclosure is not particularly limited. The electrical steel sheet may be any of an ordinary cold rolled steel sheet such as SPCC or a soft iron sheet (electrical core sheet) having high magnetic flux density, a grain-oriented electrical steel sheet or a non-oriented electrical steel sheet containing Si or Al to increase specific resistance, etc.

The thickness of the electrical steel sheet used is not particularly limited. When the steel sheet is thin, the iron loss is low. However, if the steel sheet is excessively thin, not only the shape stability decreases, but also the steel sheet manufacturing cost increases. Accordingly, the thickness of the steel sheet used is preferably 50 µm or more. On the other hand, when the steel sheet is thicker, the iron loss is higher. Besides, thick steel sheets can be integrated by caulking or welding without using bond-type coatings. Accordingly, the thickness of the steel sheet used is preferably 1 mm or less, more preferably 0.5 mm or less, and further preferably 0.3 mm or less.

Pretreatment for the electrical steel sheet as the material is not particularly limited. Although an untreated steel sheet may be used, it is advantageous to use a steel sheet that has undergone degreasing such as alkali degreasing or pickling using an acid such as hydrochloric acid, sulfuric acid, or phosphoric acid.

### (Method of applying composition for forming insulating coating)

In the application step, the composition for forming the bond-type insulating coating is applied to the surface of the electrical steel sheet as the material. The composition may be applied using any of various methods such as roll coating, flow coating, knife coating, and spraying.

The thickness of the composition applied is not particularly limited, but is determined so as to attain sufficient bond strength in the eventually obtained stacked electrical steel sheet. In detail, such bond strength that prevents the steel sheets stacked together from peeling when the stacked electrical steel sheet undergoes punching is required. For use as an iron core of an automotive motor, the shear bond strength at 180 °C is preferably 2.94 MPa (= 30 kgf/cm²) or more.

In view of the above, the film thickness of the bond-type insulating coating after baking is preferably 0.5 µm or more, and more preferably 1.0 µm or more. On the other hand, if the film thickness reaches a certain point, the effect of increasing the shear bond strength by increasing the film thickness saturates. In addition, the coating material cost increases as the film thickness increases, and the stacking factor in the iron core decreases. In view of the above, the film thickness of the bond-type insulating coating after baking is preferably 200 µm or less. The film thickness is more preferably 100 µm or less, further preferably 10 µm or less, still further preferably 6 µm or less, and most preferably 5 µm or less. Hence, the composition may be applied in the application step so that the film thickness after baking is in the aforementioned range.

The bond-type insulating coating is formed on at least one surface of the electrical steel sheet. The bond-type insulating coating is preferably formed on both surfaces of the electrical steel sheet. Depending on the purpose, the bond-type insulating coating may be formed only on one surface of the steel sheet while forming any other insulating coating on the other surface of the steel sheet.

### (Composition for forming bond-type insulating coating)

The composition for forming the bond-type insulating coating contains one or more organic resins. As the composition containing the organic resins, any of an aqueous solvent and an organic solvent may be used. In the case where the composition is aqueous, the organic resins may be any of the aqueous resins such as emulsion type, dispersion type, and water-soluble type. The total content of the organic resins in the composition is preferably 30 mass% or more and more preferably 40 mass% or more with respect to the total solid content of the composition. The upper limit of the total content of the organic resins in the composition is not particularly limited, and may be 100 mass%. In the case where a hardener and/or an additive are also used as described later, the upper limit of the total content of the organic resins in the composition may be 99 mass% or 95 mass%.

The organic resins includes at least one phenolic resin. The phenolic resin has excellent heat resistance, and is suitable for uses where high-temperature bond property and high-temperature oil resistance are required. Moreover, the phenolic resin is typically inexpensive, and economically advantageous. The phenolic resin is at least one selected from the group consisting of novolac type, resol type, and a mixture thereof.

The content of the phenolic resin in the composition is 60 mass% or more with respect to the total solid content of the composition. If the content of the phenolic resin is 40 mass% or more, the bond strength of the steel sheets after stacking can be enhanced, and sticking when the steel strips are once coiled between the baking step and the heating and pressing step can be suppressed. The upper limit of the content of the phenolic resin is not particularly limited, and may be 100 mass% with respect to the total solid content of the composition. In the case where a hardener and/or an additive are also used as described later, the upper limit of the content of the phenolic resin in the composition may be 99 mass% or 95 mass% with respect to the total solid content of the composition.

The composition may also contain one or more resins other than the phenolic resin. The resins other than the phenolic resin may be thermoplastic resins such as acrylic resin, polyamide resin, and vinyl resin. The total content of these resins is less than 40 mass% with respect to the total solid content of the composition. If the content is less than 40 mass%, there is no problem of a decrease in shear bond strength or high-temperature oil resistance at high temperature. The composition may also contain one or more resins that are typically softer than the phenolic resin, such as silicone resin and epoxy resin. The total content of the silicone resin and the epoxy resin is less than 40 mass% with respect to the total solid content of the composition. If the content is less than 40 mass%, there is no problem of a decrease in sticking resistance in the electrical steel sheet for stacking, and also the coating is kept from squeezing out from the stacked end surface during the heating and pressing treatment and causing lower shear strength.

The composition may contain a hardener according to need. The hardener may be one or more selected from various known hardeners such as formaldehyde, isocyanate, melamine, dicyandiamide, and amines.

The composition may further contain any of various known additives. The contained additive(s) may be one or more selected from compounds of Al, Ca, Li, F, P, Zn, V, Te, Ge, Ag, Tl, S, I, Br, As, Bi, Cd, Pb, etc., inorganic compounds such as pigments, rust inhibitors, surfactants, defoamers, and the like. The compounds of Al, etc. may be aluminum hydroxide and aluminum oxide. The inorganic compounds are preferably inorganic pigments such as colloidal silica, carbon black, barium sulfate, titania, and alumina. The rust inhibitors may be aliphatic amines which are reducing agents, or ethylenediaminetetraacetic acids (EDTA) which are chelators. The surfactants are preferably nonionic surfactants, and more preferably acetylene glycol-based surfactants which are less foamable and have high wettability improving effect. The acetylene glycol-based surfactants are more preferably obtained by adding ethylene oxide to acetylene glycol. The defoamers are preferably silicone-based defoamers or acetylene glycol-based defoamers.

The total content of the additives in the composition is not particularly limited. The total content of the additives is preferably 20 mass% or less and more preferably 10 mass% or less with respect to the total solid content of the composition. If the total content of the additives is 20 mass% or less, there is no adverse effect. The lower limit of the total content of the additives is not particularly limited, and may be determined as appropriate depending on the additives used. For example, the total content of the additives may be 0.1 mass% or more or 1 mass% or more with respect to the total solid content of the composition. Although As, Bi, Cd, and Pb can be added to the composition, it is environmentally preferable not to add them.

The composition of the bond-type insulating coating obtained in the disclosure is the same as that of the solids of the composition used to form the coating.

### (Baking)

The bond-type insulating coating may be baked using any of various known heating methods such as hot-air heating, infrared heating, and induction heating. The end-point steel sheet temperature in the baking treatment is preferably 150 °C or more and 350 °C or less, and more preferably 150 °C or more and 200 °C or less. If the end-point steel sheet temperature is 150 °C or more, the resulting coating is not excessively soft, so that the coiled steel strips are kept from sticking to each other and increasing the operation load in uncoiling (unwinding). An end-point steel sheet temperature of 350 °C or less is preferable because part of the linking groups which contribute to the reaction in the coating remains without linking and as a result desired shear bond strength develops when the stacked electrical steel sheet is formed. The time to reach the end-point steel sheet temperature may be 1 second or more and 100 seconds or less. If the time is 1 second or more, baking is sufficient, and the coating will not remain in liquid state. If the time is 100 seconds or less, the baking step does not take long, and so a decrease in manufacturing efficiency is prevented.

### (Stacking)

A plurality of electrical steel sheet for stacking after the baking treatment is stacked. The number of steel sheets stacked is not limited. However, a smaller number of steel sheets requires a larger number of times punching is performed and leads to press mold wearing or lower manufacturing efficiency, whereas a larger number of steel sheets leads to lower workability and formability of the stacked electrical steel sheet. Accordingly, the number of steel sheets stacked is preferably 2 or more and 10 or less, and more preferably 3 or more and 8 or less.

### (Heating and pressing)

In the heating and pressing step, the electrical steel sheets for stacking stacked in the stacking step are heated and pressed simultaneously to be integrated. The heating and pressing treatment is preferably performed with a heating temperature of 100 °C to 250 °C and a pressure of 0.49 MPa to 4.90 MPa (= 5 kgf/cm² to 50 kgf/cm²). The time for the heating and pressing treatment is preferably 5 minutes to 48 hours. By performing the heating and pressing step in the aforementioned heating temperature range, pressure range, and time range, complete hardening is achieved with no unreacted linking groups remaining in the coating, thus ensuring the bond strength of the stacked electrical steel sheet.

The total thickness of the stacked electrical steel sheet after the heating and pressing treatment is preferably 10 mm or more and less than 300 mm. If the total thickness is 10 mm or more, the effects of low iron loss and high magnetic flux density which are the features of the electrical steel sheets are sufficient. If the total thickness is less than 300 mm, the stacked material is manufactured easily in a heating and pressing jig, which improves the manufacturing efficiency of the stacked electrical steel sheet.

### (Manufacture of iron core for automotive motor)

Stacked electrical steel sheets obtained in the aforementioned way are stacked through their bond-type insulating coatings, to manufacture an iron core for an automotive motor. The stacked electrical steel sheets thus stacked can be fixed using any method. Examples of the fixing method include caulking, bolting, fixing with other jigs, bonding by heating and pressing, welding, and any combination thereof. The use of the bond-type insulating coatings according to the disclosure complements the bond strength in the fixing method. Hence, the number of caulking points, the number of bolts, or the welded part can be reduced as compared with a method of fixing electrical steel sheets using conventional insulating coatings with poor bonding function unlike the bond-type insulating coatings according to the disclosure. This contributes to a more efficient iron core manufacturing process.

### EXAMPLES

The following describes the advantageous effects of the disclosure in detail based on examples, although the disclosure is not limited to these examples.

Each steel sheet with a size of 150 mm in width and 300 mm in length was cut from a non-oriented electrical steel sheet whose sheet thickness is shown in Table 1, and used as a sample. The electrical steel sheet as the sample was immersed in an ordinary-temperature sodium orthosilicate solution (0.8 mass% in concentration) for 30 seconds, and then washed with water and dried. Each type of composition was applied to the surface (both surfaces) of this pretreated sample using a roll coater, and baked in a hot-air baking oven. After this, the sample was allowed to cool at room temperature, thus obtaining an electrical steel sheet for stacking. The composition used, the end-point steel sheet temperature, the time to reach the temperature, and the film thickness after the baking are shown in Table 1. The resin, hardener, pigment, and additive used are shown respectively in Tables 2 to 5.

For each electrical steel sheet for stacking obtained as a result of the baking step, the Martens hardness and the logarithmic decrement peak temperature were measured, and the sticking resistance, the punching quality, and the shear bond strength at 180 °C were evaluated. The results are shown in Table 6. The measurement and evaluation methods are as follows.

### (Martens hardness)

The Martens hardness of the surface of the bond-type insulating coating was measured using ultra-microhardness meter HM2000 made by FISCHER. A diamond-made Vickers indenter of a quadrangular pyramid having an angle between the opposite faces of 136° was used for measurement at room temperature (25 °C), and the Martens hardness was calculated from the slope of the load-recess depth curve.

### (Logarithmic decrement peak temperature)

The logarithmic decrement peak temperature was measured using rigid body pendulum-type physical property tester RPT-3000W made by A&D Company, Limited, according to ISO 12013-1 and 12013-2. The heating rate during the measurement was 12.5 °C /min. The edge of the pendulum was a knife edge.

### (Sticking resistance)

Each electrical steel sheet for stacking obtained as a result of the baking step was sheared to 50 mm × 50 mm, and five steel sheets were stacked to form a sticking resistance evaluation sample. The sample was subjected to heating and pressing treatment of 4.90 MPa (= 50 kgf/cm²) and 50 °C for 24 hours in the atmosphere and then cooled. After this, the peelability of the steel sheets was evaluated. The evaluation was performed by dropping a weight of 100 g from a height of 5 cm onto the five steel sheets stacked together (drop test) and determining whether or not the steel sheets peeled. The criteria are as follows.

### (Criteria)

Good: peeling observed when the test piece was removed from the heating and pressing jig
Fair: peeled as a result of drop test
Poor: not peeled as a result of drop test

### (Punching quality)

Each electrical steel sheet for stacking was repeatedly punched using a 15mmφ steel die. The punching quality of the electrical steel sheet for stacking was evaluated based on the number of times punching was performed until the burr height reached 50 µm. The criteria are as follows.

### (Criteria)

Excellent: 1200000 times or more
Good: 1000000 times or more and less than 1200000 times
Fair: 700000 times or more and less than 1000000 times
Poor: 300000 times or more and less than 700000 times
Very poor: less than 300000 times

### (Shear bond strength at 180 °C)

Each shear tensile test piece was made according to JIS K6850-1999, and subjected to a tensile test. Two electrical steel sheets for stacking (25 mm in width × 100 mm in length) obtained as a result of the baking step were stacked in the state of being displaced so that their insulating coatings bonded to each other in the part of 10 mm from the end (lap part: 25 mm in width × 10 mm), and subjected to heating and pressing treatment under the conditions of 200 °C in temperature, 1.96 MPa (= 20 kgf/cm²) in pressure, and 1 hour in treatment time, to produce the test piece. Setting the tensile test environment to 180 °C, the test piece was held at this temperature for 10 minutes, and then the test was conducted while maintaining the temperature. The test rate was 3 mm/min. The measured tensile strength was determined based on the following criteria.

### (Criteria)

Excellent: 3.92 MPa or more
Good: 2.94 MPa or more and less than 3.92 MPa
Fair: 1.96 MPa or more and less than 2.94 MPa
Poor: 0.98 MPa or more and less than 1.96 MPa
Very poor: less than 0.98 MPa

Next, a plurality of electrical steel sheets for stacking obtained as a result of the baking step were stacked and subjected to heating and pressing treatment, to produce a stacked electrical steel sheet. The conditions of the heating and pressing treatment were 200 °C in heating temperature, 1.96 MPa (= 20 kgf/cm²) in pressure, and 1 hour in treatment time. The number of steel sheets stacked is shown in Table 1. Further, a plurality of stacked electrical steel sheets were stacked and fixed together through their bond-type insulating coatings, to produce an iron core. The conditions of the fixing were 200 °C in heating temperature, 1.96 MPa (= 20 kgf/cm²) in pressure, and 1 hour in treatment time. The number of stacked electrical steel sheets stacked is shown in Table 1.

For each of the obtained stacked electrical steel sheets, the high-temperature oil resistance was evaluated. The results are shown in Table 6. The evaluation method is as follows.

### (High-temperature oil resistance)

The stacked electrical steel sheet was immersed in oil held at 180 °C, for 500 hours. The stacked electrical steel sheet was then removed and allowed to cool, and whether or not the stacked electrical steel sheet separated or peeled was observed. As the oil, Daphne Super Hydro 46HF made by Idemitsu Kosan Co., Ltd. was used. The criteria are as follows.

### (Criteria)

Excellent: neither separated nor peeled
Good: not separated but locally peeled
Poor: separated into two or more parts

As shown in Table 6, each sample having the coating with Martens hardness of 50 or more and less than 500 had good sticking resistance and also was favorable in shear bond strength at 180 °C, high-temperature oil resistance, and punching quality, regardless of the components of the bond-type insulating coating used. In particular, each sample with a logarithmic decrement peak temperature of 50 °C or more and 200 °C or less had better shear bond strength at 180 °C. Moreover, each iron core produced using the stacked electrical steel sheets satisfying the conditions according to the disclosure had sufficiently favorable properties as an iron core for an automotive motor.

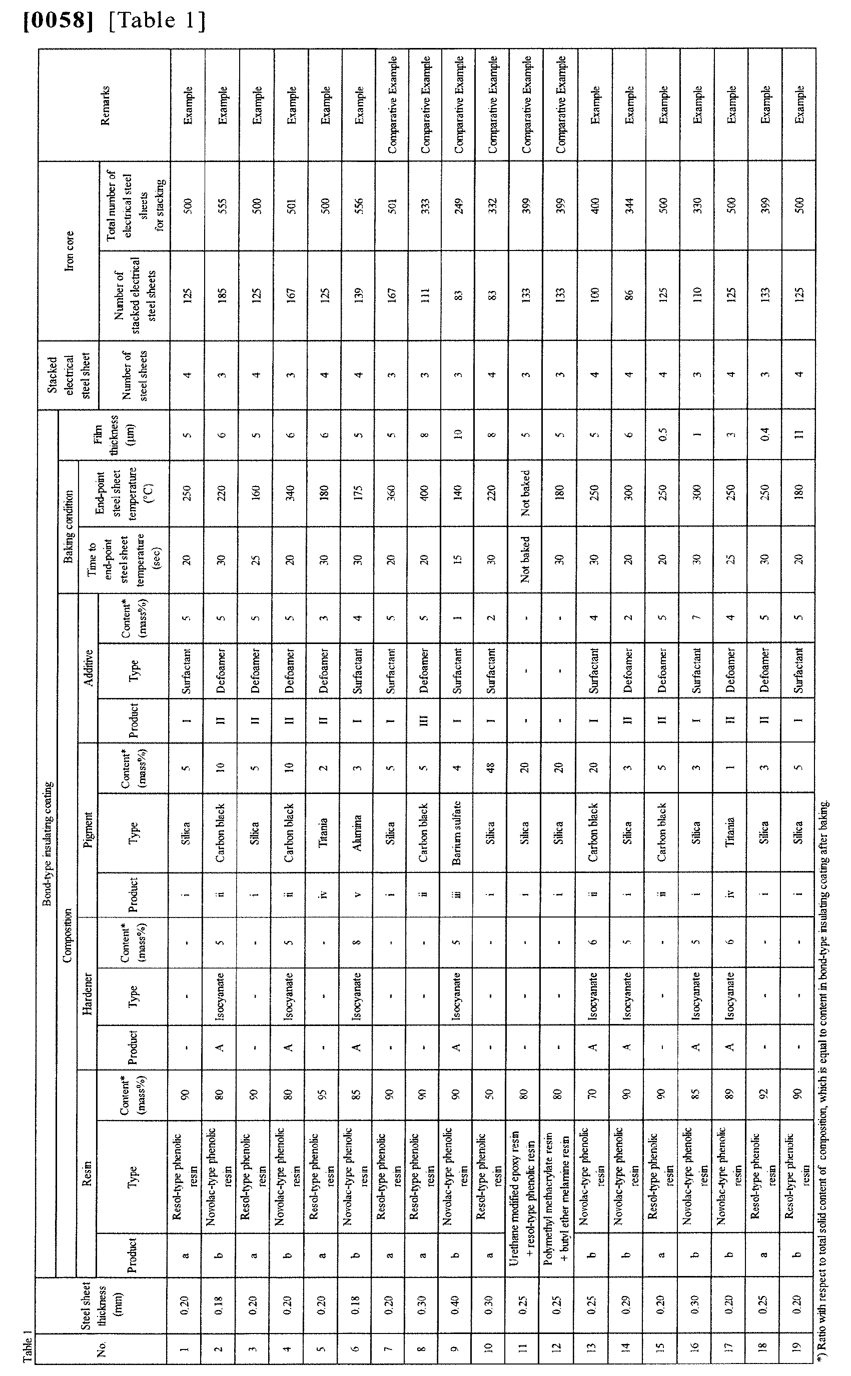

### [Table 2]

**Table 2**

| No. | Resin product |
|---|---|
| a | Resol-type phenolic resin (PC-1 made by Sumitomo Bakelite Co., Ltd.) |
| b | Novolac-type phenolic resin (LA-7052 made by DIC) |

### [Table 3]

**Table 3**

| No. | Hardener |
|---|---|
| A | Isocyanate (D-750 made by DIC) |

### [Table 4]

**Table 4**

| No. | Pigment |
|---|---|
| i | Silica (AT series made by Adeka Corporation) |
| ii | Carbon black (Carbon black#44 made by Mitsubishi Chemical Corporation) |
| iii | Barium sulfate (W-1 made by Takehara Kagaku Kogyo Co., Ltd.) |
| iv | Titania (TTO-55(D) made by Ishihara Sangyo Kaisha, Ltd.) |
| v | Alumina (YP-100 made by Sano Paint Co., Ltd.) |

### [Table 5]

**Table 5**

| No. | Additive |
|---|---|
| I | Surfactant (Surfynol 400 made by Nissin Chemical Industry Co., Ltd.) |
| II | Defoamer (KM-7750 made by Shin-Etsu Chemical Co., Ltd.) |
| III | Defoamer (Dynol 604 made by Nissin Chemical Industry Co., Ltd.) |

### [Table 6]

**Table 6**

| No. | Evaluation result of bond-type insulating coating | | Evaluation result of electrical steel sheet for stacking | | | Evaluation result of stacked electrical steel sheet | Remarks |
|---|---|---|---|---|---|---|---|
| | Martens hardness HM | Logarithmic decrement peak temperature (°C) | Sticking resistance | Punching quality | Shear bond strength at 180 °C (kg/cm²) | High-temperature oil resistance | |
| 1 | 200 | 150 | Good | Good | Good | Good | Example |
| 2 | 350 | 125 | Good | Excellent | Excellent | Good | Example |
| 3 | 200 | 130 | Good | Good | Excellent | Good | Example |
| 4 | 350 | 150 | Good | Good | Good | Good | Example |
| 5 | 325 | 160 | Good | Good | Good | Good | Example |
| 6 | 330 | 155 | Good | Good | Good | Good | Example |
| 7 | 600 | No peak | Good | Good | Very poor | Poor | Comparative Example |
| 8 | 550 | No peak | Good | Very poor | Very poor | Poor | Comparative Example |
| 9 | 40 | 120 | Poor | Good | Good | Good | Comparative Example |
| 10 | 520 | 150 | Good | Very poor | Very poor | Poor | Comparative Example |
| 11 | 30 | 130 | Poor | Good | Good | Good | Comparative Example |
| 12 | 510 | 160 | Good | Very poor | Very poor | Poor | Comparative Example |
| 13 | 250 | 40 | Good | Good | Good | Good | Example |
| 14 | 400 | 230 | Good | Good | Good | Good | Example |
| 15 | 200 | 100 | Good | Good | Good | Good | Example |
| 16 | 320 | 150 | Good | Good | Good | Good | Example |
| 17 | 350 | 125 | Good | Excellent | Excellent | Good | Example |
| 18 | 330 | 150 | Good | Good | Good | Good | Example |
| 19 | 200 | 100 | Good | Excellent | Excellent | Good | Example |

## Claims

1. An electrical steel sheet for stacking, comprising:
an electrical steel sheet; and
a bond-type insulating coating formed on at least one surface of the electrical steel sheet and having Martens hardness HM of 50 or more and less than 500, calculated from the slope of the load-recess depth curve obtained with a diamond-made Vickers indenter of a quadrangular pyramid having an angle between the opposite faces of 136° at 25 °C,
wherein the bond-type insulating coating contains at least one phenolic resin selected from novolac type, resol type, and a mixture thereof in an amount of 60 mass% or more with respect to the total solid content, and
a total content of resins other than the phenolic resin in the bond-type insulating coating is less than 40 mass% with respect to the total solid content.

2. The electrical steel sheet for stacking according to claim 1,
wherein the bond-type insulating coating has a logarithmic decrement peak temperature of 50 °C or more and 200 °C or less measured by a rigid body pendulum test defined in ISO 12013-1 and 12013-2.

3. A stacked electrical steel sheet, comprising
a plurality of the electrical steel sheet for stacking according to claim 1 or 2 stacked through the bond-type insulating coating.

4. A method of manufacturing a stacked electrical steel sheet, comprising:
stacking a plurality of the electrical steel sheet for stacking according to claim 1 or 2; and
simultaneously heating and pressing the stacked plurality of the electrical steel sheet for stacking.

5. An iron core for an automotive motor, comprising
a plurality of the stacked electrical steel sheet according to claim 3 stacked through the bond-type insulating coating.

## Patentansprüche

1. Elektrostahlblech zum Schichten, umfassend:
ein Elektrostahlblech; und
eine Isolationsbeschichtung des Verbindungstyps, die auf zumindest einer Oberfläche des Elektrostahlblechs gebildet ist und eine Martenshärte HM von 50 oder mehr und weniger als 500 aufweist, berechnet aus der Steigung der Last-Eindringtiefen-Kurve, die mit einem aus Diamant hergestellten Vickers-Eindringkörper einer viereckigen Pyramide, die zwischen den gegenüberliegenden Seiten bei 25°C einen Winkel von 136° aufweist, erhalten wird,
wobei die Isolationsbeschichtung des Verbindungstyps zumindest ein Phenolharz, ausgewählt aus dem Novolak-Typ, dem Resol-Typ und einer Mischung davon in einer Menge von 60 Massen% oder mehr mit Bezug auf den Gesamtfeststoffgehalt beinhaltet, und
der Gesamtgehalt an Harzen in der Isolationsbeschichtung des Verbindungstyps, die kein Phenolharz sind, mit Bezug auf den Gesamtfeststoffgehalt weniger als 40 Massen% beträgt.

2. Elektrostahlblech zum Schichten gemäß Anspruch 1,
wobei die Isolationsbeschichtung des Verbindungstyps eine logarithmische Dekrementspitzentemperatur von 50°C oder mehr und 200°C oder weniger aufweist, gemessen durch einen in ISO 12013-1 und 12013-2 definierten Starrpendelkörper-Test.

3. Geschichtetes Elektrostahlblech, umfassend
eine Mehrzahl der Elektrostahlbleche zum Schichten gemäß Anspruch 1 oder 2, die mittels der Isolationsbeschichtung des Verbindungstyps geschichtet sind.

4. Verfahren zur Herstellung eines geschichteten Elektrostahlblechs, umfassend:
das Schichten einer Mehrzahl der Elektrostahlbleche zum Schichten gemäß Anspruch 1 oder 2; und
gleichzeitiges Heizen und Pressen der geschichteten Mehrzahl der Elektrostahlbleche zum Schichten.

5. Eisenkern für einen Automobilmotor, umfassend
eine Mehrzahl der geschichteten Elektrostahlbleche gemäß Anspruch 3, die mittels der Isolationsbeschichtung des Verbindungstyps geschichtet sind.

## Revendications

1. Tôle d'acier électrique pour empilement, comprenant :
une tôle d'acier électrique ; et
un revêtement isolant de type à liaison formé sur au moins une surface de la tôle d'acier électrique et ayant une dureté de Martens HM de 50 ou plus et de moins de 500, calculée à partir de la pente de la courbe charge-profondeur d'évidement obtenue avec un pénétrateur de Vickers composé de diamant d'une pyramide quadrangulaire ayant un angle entre les faces opposées de 136° à 25 °C,
dans laquelle le revêtement isolant de type à liaison contient au moins une résine phénolique sélectionnée parmi le type novolac, le type résol, et un mélange de ceux-ci en une quantité de 60 % en masse ou plus par rapport à la teneur solide totale, et
une teneur totale de résines autres que la résine phénolique dans le revêtement isolant de type à liaison est inférieure à 40% en masse par rapport à la teneur solide totale.

2. Tôle d'acier électrique pour empilement selon la revendication 1,
dans laquelle le revêtement isolant de type à liaison a une température de pointe à décrément logarithmique de 50 °C ou plus et 200 °C ou moins mesurée par un essai au pendule à corps rigide défini dans la norme ISO 12013-1 et 12013-2.

3. Tôle d'acier électrique empilée, comprenant
une pluralité de la tôle d'acier électrique pour empilement selon la revendication 1 ou 2 empilée à travers le revêtement isolant de type à liaison.

4. Procédé de fabrication d'une tôle d'acier électrique empilée, comprenant :
l'empilement d'une pluralité de la tôle d'acier électrique pour empilement selon la revendication 1 ou 2 ;
le chauffage et le pressage simultanés de la pluralité empilée de la tôle d'acier électrique pour empilement.

5. Noyau en fer pour un moteur d'automobile, comprenant
une pluralité de la tôle d'acier électrique empilée selon la revendication 3 empilée à travers le revêtement isolant de type à liaison.
